# DEMANDE DE BREVET EUROPEEN

(11) **EP 1 164 065 A1**
(43) Date de publication de la demande: **19.12.2001**
(21) Numéro de dépôt: 01440175.6
(22) Date de dépôt: 18.06.2001
(51) Int. Cl.: B60S 1/48

(54) **Dispositif de dégivrage de pare-brise de véhicule automobile**

(30) Priorité: 16.06.2000 FR 0007725
(71) Demandeur: Depierreux, Gilbert, 08130 Attigny (FR)
(72) Inventeur: Depierreux, Gilbert, 08130 Attigny (FR)
(74) Mandataire: Rhein, Alain

(57) **Abrégé**

L'invention concerne un dispositif de dégivrage de pare-brise de véhicule automobile comprenant un dispositif (1) pour le réchauffage du liquide lave-glace (19), du type comportant un récipient (4) intercalé entre un réservoir (2) de liquide lave-glace (19) et au moins une buse de pulvérisation (7), dans lequel le liquide lave-glace (19) transite du bas vers le haut, et qui comporte au moins une résistance chauffante (5) du liquide lave-glace (19).

Le dispositif de réchauffage (1) la ou les résistances (5) sont disposées sensiblement à mi-hauteur dans le récipient (4), et s'étendent en sorte de former une chicane constituant un passage obligé pour le liquide lave-glace (19), tandis des moyens (16A, 16B) de contrôle de la température du liquide lave-glace (19) sont disposés à l'intérieur du récipient (4) à proximité de l'embouchure de sortie vers la ou les buses (7).

## Description

La présente invention concerne un dispositif de dégivrage de pare-brise de véhicule automobile, comprenant un dispositif pour le réchauffage du liquide lave-glace.

De tels dispositifs permettent de faciliter et d'accélérer le dégivrage des vitres d'un véhicule par temps froid, grâce à l'utilisation de liquide lave-glace chaud projeté sur la ou les surfaces à dégager.

L'utilisation de liquide lave-glace chaud permet en outre d'améliorer l'efficacité du produit et donc la qualité du nettoyage des vitres.

Les dispositifs pour le réchauffage du liquide lave-glace connus, utilisent pour la plupart une résistance chauffante, ils remplacent ceux qui antérieurement utilisaient les calories émises par le moteur par l'intermédiaire du liquide de refroidissement, et qui n'étaient pas utilisés pour dégivrer un pare-brise, mais pour éviter que le lave-glace ne givre par temps très froid.

Le document FR 2 763 549, décrit un dispositif de chauffage de liquide lave-glace, dans lequel on fait circuler ce dernier à l'intérieur d'une résistance électrique en forme de tube métallique creux, recouvert d'une couche isolante, ladite résistance étant connectée aux bornes de la batterie du véhicule. En faisant chauffer la résistance, on chauffe simultanément le liquide lave-glace, qui est ensuite projeté chaud sur la ou les vitres à dégivrer, avec toutefois l'inconvénient d'un risque de bouchage dudit tube, et de difficultés de contrôle de la température du liquide lave-glace.

Le document WO 98/58826 décrit un dispositif comportant un récipient intercalé entre le réservoir du liquide lave-glace et les gicleurs, à l'intérieur duquel circule le liquide lave-glace et dans lequel un élément chauffant, par exemple une résistance électrique, chauffe le liquide après avoir préalablement préchauffer le récipient afin d'accélérer le chauffage du liquide.

De même, le document FR 2 419 849 décrit un dispositif de réchauffage de liquide lave-glace dans lequel une résistance chauffante plongée dans le réservoir du liquide lave-glace permet de réchauffer ce dernier sur demande.

Ces différents dispositifs présentent cependant un certain nombre d'inconvénients.

En effet, les dégivrages ne s'effectuent pas toujours aussi aisément que souhaité, et le temps nécessaire pour arriver à un résultat satisfaisant est en général beaucoup trop long.

Ceci peut alors avoir pour conséquence de solliciter la batterie inutilement, et de ne plus permettre le démarrage du véhicule, sachant que par temps froid le lancement du moteur nécessite plus d'énergie.

D'autres inconvénients sont également liés à la manière dont le liquide lave-glace est projeté sur le pare-brise gelé.

En général, le liquide lave-glace est projeté par l'intermédiaire d'un ou deux gicleurs positionnés de manière classique au bas du pare-brise ou de la vitre arrière du véhicule.

Cependant, en ruisselant ensuite sur le pare-brise, le liquide lave-glace chaud va créer une rigole dans laquelle tout produit projeté par la suite aura tendance à s'écouler de manière préférentielle, au détriment des autres zones du pare-brise qui ne seront pas dégivrées.

On connaît également par le document US 5.509.606 un dispositif de réchauffage de liquide lave-glace comprenant, intercalé sur le circuit de circulation de liquide lave-glace en amont des buses de projection, un récipient destiné à être traversé par ledit liquide, et dans lequel agit une résistance apte à réchauffer ledit liquide lave-glace qui y séjourne. L'alimentation en liquide lave-glace est réalisée dans le bas du récipient tandis que le prélèvement est pratiqué dans le haut dudit récipient. Ce dispositif ne peut pas donner entière satisfaction, en effet la résistance est disposée axialement dans le récipient, au milieu de celui-ci, en sorte qu'elle chauffe le liquide lave-glace essentiellement par conduction du centre vers les bords alors que le flux de liquide est axial, du bas vers le haut.

La présente invention se propose de remédier aux divers inconvénients précités, en proposant un dispositif de conception simple et efficace, et qui de plus est d'un coût peu élevé.

Le dispositif de dégivrage de pare-brise de véhicule automobile comprenant un dispositif pour le réchauffage du liquide lave-glace, est du type comportant un récipient intercalé entre un réservoir de liquide lave-glace et au moins une buse de pulvérisation, dans lequel ledit liquide lave-glace transite du bas vers le haut, et qui comporte au moins une résistance chauffante du liquide lave-glace, et il se caractérise en ce que dans ledit dispositif de réchauffage la ou les résistances sont disposées sensiblement à mi-hauteur dans ledit récipient, et s'étendent en sorte de former une chicane constituant un passage obligé pour ledit liquide lave-glace, tandis des moyens de contrôle de la température dudit liquide lave-glace sont disposés à l'intérieur dudit récipient à proximité de l'embouchure de sortie vers la ou lesdites buses.

La disposition de la ou les résistances, et le passage forcé du liquide lave-glace au travers de la chicane ainsi formée, entraînent un réchauffement dudit liquide par couches superposées dans le sens vertical, et non du centre vers l'extérieur comme pour les dispositifs existants, en sorte qu'il est plus aisé de contrôler la température de l'eau envoyée vers la ou les buses.

Selon une caractéristique additionnelle du dispositif selon l'invention, la ou les buses de pulvérisation du liquide lave-glace sont solidaires du ou des balais d'essuie-glace du véhicule automobile.

De préférence, chaque balai d'essuie-glace comporte une série de plusieurs buses de pulvérisation, lesquelles buses sont disposées le long dudit balai d'essuie-glace.

Selon une autre caractéristique additionnelle du dispositif selon l'invention, il comporte des moyens de commande permettant l'activation du dispositif de chauffage au moment du déverrouillage des portières, associés à des moyens de contrôle de la température extérieure.

De manière particulièrement avantageuse, le dispositif selon l'invention comporte des moyens autorisant son déclenchement dans une fourchette de températures extérieures comprises entre -5°C et +2°C.

Selon une autre caractéristique additionnelle du dispositif selon l'invention, il comporte des moyens de déclenchement ou d'inhibition du fonctionnement de la ou des résistances, en fonction de la température du liquide lave-glace au sein du récipient.

Selon une autre caractéristique additionnelle du dispositif selon l'invention, il comporte des moyens permettant, pendant l'opération de pulvérisation de liquide lave-glace réchauffé, d'inhiber la commande temporisée du ou des balais d'essuie-glace associée à la commande de pulvérisation de liquide lave-glace.

En effet, dans la grande majorité des cas, la commande de pulvérisation est couplée à un fonctionnement temporisé des essuie-glaces, et on sait qu'il est fréquent, lorsque le pare-brise est givré, que les balais d'essuie-glace restent collés par le froid audit pare-brise, et le déclenchement de la pulvérisation et donc le fonctionnement des essuie-glaces alors que ceux-ci sont collés, pourraient entraîner une détérioration des balais et/ou des moteurs.

Ainsi, l'inhibition de la commande temporisée des essuie-glaces, permet, que ce soit au moyen de buses disposées sur les essuie-glaces ou placées à la base du pare-brise, la pulvérisation sur ce dernier d'eau réchauffée, laquelle va contribuer, en demeurant le long des balais, à décoller ceux-ci du pare-brise. Après décollement, les essuie-glaces pourront être actionnés de manière conventionnelle, en association avec la pulvérisation d'eau chaude sur le pare-brise pour dégivrer celui-ci.

On notera que ce mode de réalisation est particulièrement adapté à des essuie-glaces comportant chacun une ou plusieurs buses. Toutefois, dans le cas de buses disposées à la base du pare-brise, même dans le cas de formation de rigoles, l'eau redescend sur le pare-brise et se répand le long des balais et peut ainsi contribuer à leur décollement.

Selon une autre caractéristique additionnelle du dispositif selon l'invention, le dispositif de réchauffage comporte deux séries, alimentées de manière indépendante et à rendement dégressif, de plusieurs résistances, lesdites résistance étant montées en quinconce.

Selon une autre caractéristique additionnelle du dispositif selon l'invention, il comporte des moyens de commande d'alimentation des résistances associés à des moyens de temporisation, prévus aptes à permettre une alimentation en alternance selon une séquence donnée les résistances d'une série puis de l'autre.

L'alternance d'alimentation a pour but d'éviter la création d'une émulsion dans le récipient, et permet d'économiser la batterie.

Il est également possible, selon les conditions de température mesurées, de prévoir une période de préchauffage, débutant par exemple lors du déverrouillage des portières, qui est réalisée en alimentant simultanément l'ensemble des résistances.

L'invention sera mieux comprise à la lecture de la description qui va suivre, se rapportant à des exemples de réalisation donnés à titre indicatif et non limitatif.

La compréhension de cette description sera facilitée au vu des dessins joints en annexe dans lesquels :
La figure 1 représente une vue schématique du dispositif selon l'invention,
La figure 2 représente un schéma du même dispositif.

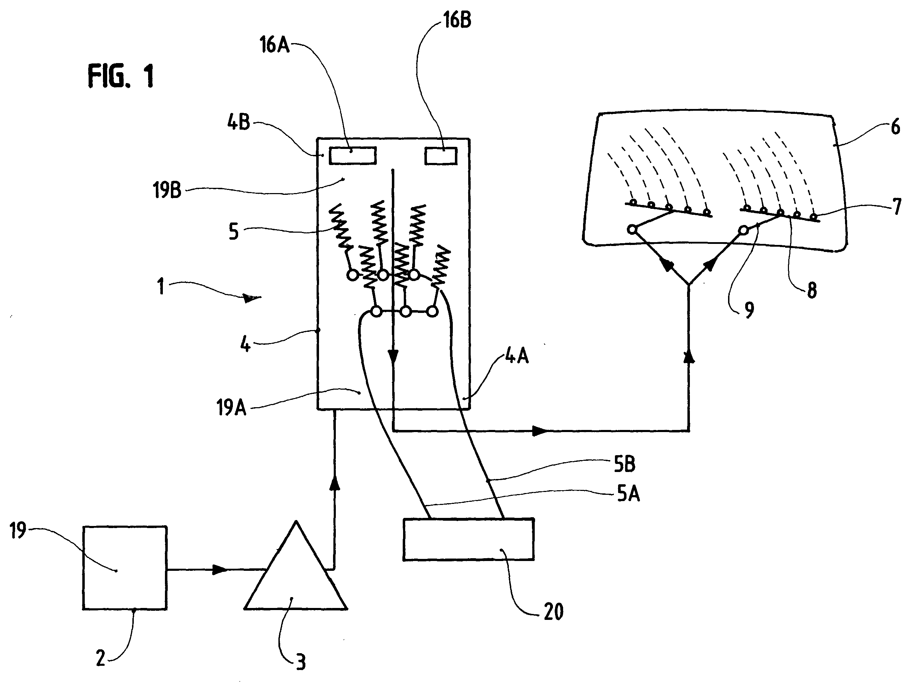

En se référant à la figure 1, on a schématisé un dispositif de dégivrage selon l'invention comprenant un dispositif 1 de réchauffage comportant un réservoir 2 de liquide lave-glace 19, une pompe 3 permettant de faire circuler le liquide lave-glace 19 notamment du réservoir 2 vers un récipient 4, dont la forme est choisie de préférence sensiblement cylindrique.

Ainsi, le liquide lave-glace 19 est amené à circuler tel qu'indiqué par le sens des flèches, afin de pénétrer dans le récipient 4 au niveau de son fond 4A, et être prélevé par le haut 4B dudit récipient 4.

Le liquide lave-glace 19 est réchauffé au sein du récipient 4, par l'intermédiaire d'au moins une résistance 5 placée sensiblement à mi-hauteur dudit récipient 4, et branchée aux bornes de la batterie 20 du véhicule, par l'intermédiaire des connecteurs 5A, 5B.

Ainsi, le liquide lave-glace est réchauffé dans le récipient 4 par nappes successives de températures croissantes du fond 4A vers le haut 4B du récipient 4.

La fraction 19A de liquide lave-glace 19 se trouvant dans le fond 4A du récipient 4 se trouvera à la température la plus basse, par exemple 5°C, alors que la fraction 19B de liquide lave-glace 19 se trouvant vers le haut 4B du récipient 4 présentera une température plus élevée, par exemple 50°C, du fait notamment de la différence de densité liée à l'échauffement par la ou les résistances 5

De plus la fraction 19B de liquide lave-glace 19, située à proximité de la ou des résistances 5 correspond à un faible pourcentage du volume total du récipient 4 et pourra donc être chauffé en un minimum de temps.

A chaque actionnement du lave-glace, une certaine quantité de liquide lave-glace 19 est prélevée par le haut 4B du récipient 4, donc en provenance de la fraction la plus chaude, et est projetée sur le pare-brise 6 d'un véhicule par l'intermédiaire de buses de pulvérisation 7.

En outre, afin d'augmenter encore la rapidité de chauffage du liquide lave-glace 19, il est prévu, tel que schématisé à la figure 1, d'augmenter la surface de contact entre le liquide lave-glace 19 et l'élément chauffant 5, en utilisant, de manière particulièrement avantageuse, deux séries de trois résistances électriques 5 déployées en éventail.

Par ailleurs, les deux séries de trois résistances 5 sont branchées en quinconce, un tel branchement alternatif présentant l'avantage d'une part d'une économie de courant, et d'autre part, et surtout, d'un accompagnement du chauffage proportionné au débit de liquide lave glace, permettant essentiellement d'éviter un effet émulseur qui ne manquerait de se créer si les résistances étaient alimentées en continu.

Comme schématisé à la figure 1, il est également prévu, de manière particulièrement avantageuse, d'utiliser deux rampes de cinq buses de pulvérisation 7, chacune solidaire du balai 8 d'un essuie-glace 9.

Cette caractéristique du dispositif de dégivrage selon l'invention permet d'une part d'obtenir le décollement des balais 8 d'essuie-glace par l'arrivée du liquide lave-glace chaud au niveau desdits balais d'essuie-glace avant leur mise en mouvement, et permet, d'autre part, d'éviter la formation de rigoles dans le givre recouvrant le pare-brise grâce à la pulvérisation, dès le premier actionnement du lave-glace, du liquide sur toute la surface du pare-brise.

Ceci a, par conséquent, pour résultat, d'éviter une usure trop rapide des balais d'essuie-glace par frottement sur le givre, et d'améliorer nettement la qualité et la vitesse du dégivrage.

En outre, le fait de projeter le liquide lave-glace chaud directement sur le pare-brise sans un nouveau passage par la pompe 3, permet de réduire au maximum la perte de chaleur au sein du liquide ce qui contribue également à l'amélioration de l'efficacité du dégivrage.

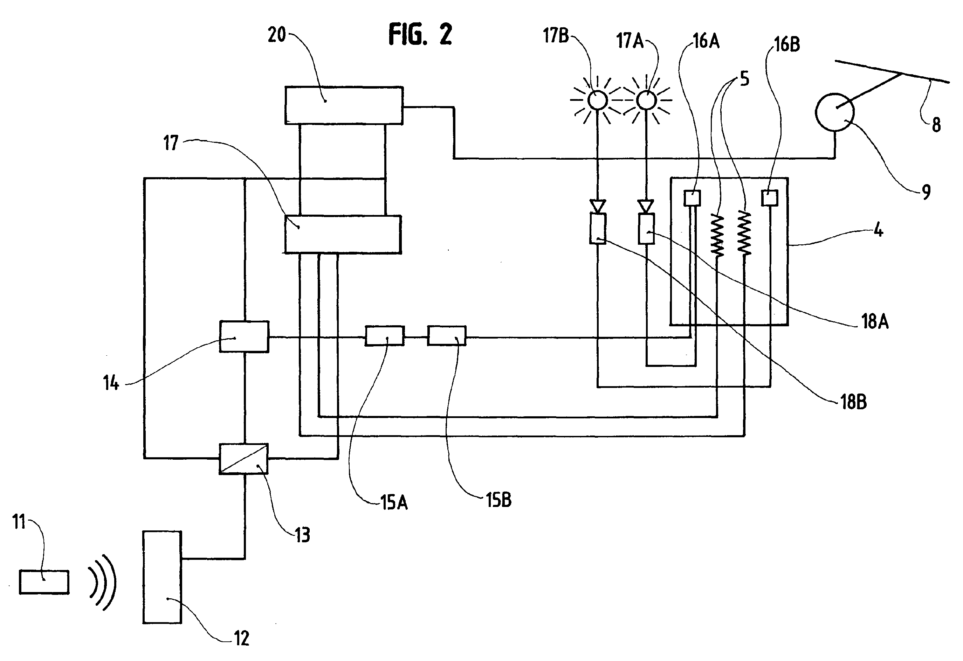

En se référant à présent à la figure 2, nous allons décrire plus en détail les différentes étapes du fonctionnement du dispositif de réchauffage 1.

Le dispositif 1 de réchauffage peut être déclenché soit à distance du véhicule, à l'aide de la télécommande d'ouverture de la portière, lorsque le conducteur souhaite gagner du temps, soit en mettant la clé dans le contact, soit en actionnant un inverseur comme cela sera décrit plus loin.

Comme schématisé à la figure 2, lorsque le dispositif 1 est actionné à l'aide d'une télécommande 11, un signal de déverrouillage est d'abord envoyé à une portière 12.

Cette dernière va ensuite envoyer un signal électrique, au travers d'un inverseur 13, vers un relais de télécommande 14 qui va lui-même envoyer un signal électrique vers deux sondes 15A et 15B permettant de mesurer la température extérieure.

Ces deux sondes 15A et 15B permettent d'autoriser ou d'interdire le déclenchement du dispositif 1 en fonction de la température extérieure lors de la mise en marche, sachant que l'évolution de la température, après mise en marche, n'a aucune incidence sur le fonctionnement du dispositif 1 de réchauffage.

On notera que l'inverseur 13 permet, s'il est actionné, de shunter les sondes 15A et 15B, et ainsi de chauffer le liquide lave-glace 19, quelle que soit la température extérieure.

Dans le cas présent, il est prévu de permettre le fonctionnement du dispositif en présence de températures extérieures allant de -5°C à +2°C.

En l'occurrence, la sonde 15A détecte une température de +2°C et la sonde 15B détecte une température de -5°C.

On considère, en effet, qu'en présence d'une température inférieure à -5°C, les résistances 5 devront fournir davantage de puissance pour réchauffer le liquide lave-glace 19, ce qui risquerait de vider la batterie 20.

De même, au-delà de +2°C, le dispositif 1 n'ayant pas de raison de fonctionner puisqu'il n'y a plus de formation de givre au-delà de cette température, il est prévu d'interdire son fonctionnement pour éviter de décharger inutilement la batterie 20.

Lorsque les sondes 15A et 15B ont mesuré la température extérieure et que cette dernière est bien comprise entre -5°C et +2°C, un signal électrique est envoyé vers une troisième sonde 16A de température, située au sein du récipient 4, au niveau de la fraction 19B du liquide lave-glace 19.

Cette sonde 16A permet de mesurer la température du liquide lave-glace 19 au sein du récipient 4.

En l'occurrence, elle est prévue apte à détecter une température de 25°C.

Lorsque la température du liquide lave-glace est inférieure à 25°C, les résistances 5 vont se mettre à chauffer, en continu, pendant une durée par exemple de 15 secondes.

Simultanément, un signal électrique est envoyé à un temporisateur 17 du fonctionnement des essuie-glaces, couplé à l'actionnement de la manette de pulvérisation, ce signal permettant d'inhiber le fonctionnement de l'essuie-glace 9, afin d'éviter d'endommager le ou les moteurs et les balais 8 d'essuie-glace, qui restent généralement collés par le givre sur le pare-brise.

Entre temps, le conducteur du véhicule s'est installé au volant de ce dernier pour démarrer.

A ce moment là, la température de la fraction 19 B du liquide lave-glace 19, située vers le haut 4B du récipient 4, est déjà de l'ordre de 20°C, et le liquide lave-glace projeté sur le pare-brise par l'intermédiaire des deux rampes de cinq buses 7 situées sur les balais 8 d'essuie-glace va permettre, dans un premier temps, de décoller les balais d'essuie-glace du pare-brise, et dans un deuxième, en association avec le fonctionnement des essuie-glaces, de commencer le dégivrage du pare-brise.

Après le démarrage du véhicule, les résistances 5 vont fonctionner en alternance, jusqu'à atteindre une température maximale au sein de la fraction 19B de liquide lave-glace de l'ordre de 50°C, détectée par une autre sonde 16B située elle aussi dans ladite fraction 19B du liquide lave-glace au sein du récipient 4.

Les sondes 16A et 16B permettent également de signaler au conducteur que les températures de 25°C et 50°C sont atteintes au sein du liquide lave-glace, par l'intermédiaire respectivement d'un voyant 17A, vert par exemple, et d'un voyant 17B, rouge par exemple, pilotés respectivement par des diodes 18A et 18B.

Ainsi, lorsque le voyant 17A s'allume, le conducteur sait qu'il dispose d'une fraction 19B de liquide lave-glace 19 ayant une température d'au moins 25°C.

Si son pare-brise n'est que faiblement gelé, il peut d'ores et déjà en entreprendre le dégivrage, en actionnant à la fois son lave-glace et son essuie-glace.

Par contre, si son pare-brise est recouvert d'une couche plus épaisse de givre, il lui suffira de patienter quelques secondes, jusqu'à ce que le voyant 17B s'allume, signalant une température au sein de la fraction 19B du liquide lave-glace 19 de l'ordre de 50°C, plus apte à dégivrer le pare-brise dans cette situation.

Lorsque la fraction 19B de liquide lave-glace a atteint la température de 50°C, la sonde 16B indique aux résistances 5 de cesser de chauffer.

Bien entendu, le fait de prélever un certain volume de liquide lave-glace à 50°C aura pour conséquence de faire baisser la température de ce dernier au sein de la fraction 19B, ce qui provoquera l'extinction du voyant 17B, et la remise en route des résistances 5, pour une durée de quelques minutes.

Si le conducteur actionne son lave-glace à plusieurs reprises et prélève successivement du liquide lave-glace à 50°C, la température de ce dernier redescendra en dessous de 25°C, et il lui faudra alors, pour un meilleur rendement, patienter quelques instants, le cas échéant, pour obtenir un nouveau volume à 50°C avant d'actionner à nouveau la manette de projection de liquide lave-glace.

La mise en route du dispositif 1 de réchauffage à distance pourra de surcroît être interdite grâce à la manipulation d'un inverseur 13, permettant d'empêcher la transmission du signal électrique en provenance de la portière.

Dans ce cas, le dispositif de dégivrage pourra néanmoins être déclenché suite au démarrage du véhicule, par une simple pression sur la manette de lave-glace.

Tel que cela ressort de la description qui précède, le dispositif de dégivrage selon l'invention permet d'obtenir un excellent dégivrage des vitres d'un véhicule, de manière particulièrement rapide.

De plus, sa mise en oeuvre s'effectue à l'aide de moyens simples et peu coûteux.

## Revendications

1. Dispositif de dégivrage de pare-brise de véhicule automobile comprenant un dispositif (1) pour le réchauffage du liquide lave-glace (19), du type comportant un récipient (4) intercalé entre un réservoir (2) de liquide lave-glace (19) et au moins une buse de pulvérisation (7), dans lequel ledit liquide lave-glace (19) transite du bas vers le haut, et qui comporte au moins une résistance chauffante (5) du liquide lave-glace (19), **caractérisé en ce que** dans ledit dispositif de réchauffage (1) la ou les résistances (5) sont disposées sensiblement à mi-hauteur dans ledit récipient (4), et s'étendent en sorte de former une chicane constituant un passage obligé pour ledit liquide lave-glace (19), tandis des moyens (16A, 16B) de contrôle de la température dudit liquide lave-glace (19) sont disposés à l'intérieur dudit récipient (4) à proximité (4B) de l'embouchure de sortie vers la ou lesdites buses (7).

2. Dispositif selon la revendication 1, **caractérisé en ce que** la ou les buses de pulvérisation (7) du liquide lave-glace (19) sont solidaires du ou des balais (8) d'essuie-glace (9) du véhicule automobile.

3. Dispositif selon la revendication 2, **caractérisé en ce que** chaque balai (8) d'essuie-glace (9) comporte une série de plusieurs buses de pulvérisation (7), lesquelles buses (7) sont disposées le long dudit balai d'essuie-glace (8).

4. Dispositif selon l'une quelconque des revendications précédentes, **caractérisé en ce qu'**il comporte des moyens de commande permettant l'activation du dispositif de réchauffage (1) au moment du déverrouillage des portières, associés à des moyens (15A, 15B) de contrôle de la température extérieure.

5. Dispositif selon l'une quelconque des revendications précédentes, **caractérisé en ce qu'**il comporte des moyens (16A, 16B) de déclenchement ou d'inhibition du fonctionnement de la ou des résistances (5), en fonction de la température du liquide lave-glace (19) au sein du récipient (4).

6. Dispositif selon l'une quelconque des revendications précédentes, **caractérisé en ce qu'**il comporte des moyens permettant, pendant l'opération de pulvérisation de liquide lave-glace (19) réchauffé, d'inhiber la commande temporisée du ou des balais (8) d'essuie-glace (9) associée à la commande de pulvérisation de liquide lave-glace (19).

7. Dispositif selon l'une quelconque des revendications précédentes, **caractérisé en ce que** le dispositif de réchauffage (1) comporte deux séries, alimentées de manière indépendante et à rendement dégressif, de plusieurs résistances (5), lesdites résistances (5) étant montées en quinconce.

8. Dispositif selon la revendication 7, **caractérisé en ce qu'**il comporte des moyens de commande d'alimentation des résistances (5) associés à des moyens de temporisation, prévus aptes à permettre une alimentation en alternance selon une séquence donnée des résistances (5) d'une série puis de l'autre.
